# EUROPÄISCHE PATENTSCHRIFT

(11) **EP 2 910 976 B1**
(45) Veröffentlichungstag und Bekanntmachung des Hinweises auf die Patenterteilung: **24.07.2019**
(21) Anmeldenummer: 15155422.7
(22) Anmeldetag: 17.02.2015
(51) Int. Cl.: G01T 1/167

(54) **PRÜFVORRICHTUNG UND VERFAHREN ZUM DETEKTIEREN EINER OBERFLÄCHENKONTAMINATION AN LANGGESTRECKTEN GEGENSTÄNDEN**
TESTING DEVICE AND METHOD FOR DETECTING A SURFACE CONTAMINATION ON EXTENDED OBJECTS
DISPOSITIF DE VÉRIFICATION ET PROCÉDÉ DE DÉTECTION D'UNE CONTAMINATION DE SURFACE SUR DES OBJETS ALLONGÉS

(30) Priorität: 17.02.2014 DE 102014202786
(43) Veröffentlichungstag der Anmeldung: 26.08.2015
(73) Patentinhaber: EnBW Energie Baden-Württemberg AG, 76131 Karlsruhe (DE)
(72) Erfinder: Karsubke, Frank, 71711 Murr (DE); Dettling, Frank, 74336 Brackenheim (DE)
(74) Vertreter: DREISS Patentanwälte PartG mbB

(56) Entgegenhaltungen:
- WO-A2-2010/006295
- DE-T2- 3 685 891
- JP-A- S6 076 680
- JP-A- H01 116 481
- JP-A- H02 114 192
- JP-B2- 3 225 127
- US-A- 5 371 363
- US-A- 5 444 746

## Beschreibung

Die vorliegende Erfindung betrifft eine Vorrichtung zum Detektieren einer Oberflächenkontamination an langgestreckten Gegenständen nach dem Oberbegriff des Anspruchs 1; diese Vorrichtung wird im Zusammenhang mit der Erfindung auch als Prüfvorrichtung bezeichnet. Außerdem ist Teil der Erfindung ein Verfahren zum Detektieren einer Oberflächenkontamination an langgestreckten Gegenständen nach dem Oberbegriff des Anspruchs 11 und eine Steuereinrichtung für eine erfindungsgemäße Prüfvorrichtung nach dem Oberbegriff des Anspruchs 13.

Bei Wartungsarbeiten an Atomkraftwerken oder insbesondere beim Rückbau von Atomkraftwerken fallen Reststoffe an, die vor dem Verlassen des Kraftwerks auf Ihre Strahlenbelastung untersucht und anschließend in geeigneter Weise entsorgt werden müssen.

Eine Freigabe von radioaktiven Stoffen und kerntechnischen Anlageteilen regelt die DIN ISO 25457-1. Üblicherweise wird die Freigabe in einer sog. Freimessanlage vorgenommen.

Um bspw. eine radioaktive Oberflächenkontamination zu messen, stehen Kontaminationsmessgeräte zur Verfügung, die als handgeführte Messgeräte ausgebildet sind. Daher hängt die Qualität der Messungen in hohem Maße von dem Bediener des Messgeräts ab. Außerdem sind mit diesen Messgeräten Messungen an einfach oder mehrfach gekrümmten Flächen nur bedingt möglich, bzw. erfordern sehr viel Zeit.

Dies ist besonders nachteilig, weil beim Rückbau oft Messungen an Rohren, Stangen oder Kabeln nötig sind. Insbesondere bei Stangenmaterial mit kleinen Durchmessern ist eine Messung mit herkömmlichen Geräten kaum möglich. Durch eine schlechte Messgeometrie werden zumindest lange Messzeiten benötigt; die Messunsicherheit ist sehr groß. Zur sprachlichen Vereinfachung werden im Folgenden alle zu prüfenden Gegenstände als Rohr bezeichnet, obwohl stets auch andere in der Regel prismatische Gegenstände gemeint sind.

Das messtechnische Problem an solchen Gegenständen sind unterschiedliche (Mess-)abstände zwischen dem Messgerät und dem zu prüfenden Oberflächen-Abschnitt, weil ein Detektor des Messgeräts die zu prüfende Oberfläche des Rohrs in der Regel nicht in einer Einstellung bzw. Position vollständig abdeckt. Es verbleiben nur wenige Zentimeter als effektive Messfläche, die Detektion bzw. die Messung ist dadurch oft unvollständig.

Außerdem sind die zurzeit verwendeten analogen KontaminationsMessgeräte nicht in der Lage, die Messergebnisse zu speichern und Protokolle auszugeben. Der Anschluss an ein Kommunikationsnetzwerk zur Auswertung ist nicht vorgesehen, wobei dies in der DIN ISO 25457-1 gefordert ist.

Die WO 2010/046106 A1 zeigt eine Prüfvorrichtung und ein Prüfverfahren zu einer Materialprüfung von langgestreckten Gegenständen. Dabei durchläuft der langgestreckte Gegenstand ein Detektionselement, das als eine Durchlaufspule ausgebildet ist. Die vorgesehenen Messungen können berührungslos durchgeführt werden.

Aus der JP H02 114192 A ist eine Prüfvorrichtung zur gleichzeitigen Detektion von ionisierender Strahlung an der Oberfläche von Stangenmaterial bekannt. Dabei werden mehrere zu prüfende Stangen nebeneinander auf drehbaren Rollen abgelegt. Auf einem Portal, das sich quer zur Längsachse der Stangen erstreckt, ist eine Reihe von Detektoren angeordnet.

Die Detektoren sind so angeordnet, dass sie eine Kontamination der Oberseite der zu prüfenden Stangen erfassen können. Durch eine Drehung der Stangen um 180° wird die andere Seite der Stangen in den Arbeitsbereich der Detektoren gebracht.

Diese Vorrichtung ist darauf ausgelegt eine Vielzahl von Stangen gleichen Durchmessers zeitgleich zu überprüfen. Die gleichzeitige Prüfung von Stangen mit unterschiedlichem Durchmesser und die Anpassung dieser Vorrichtung an andere Durchmesser der Stangen ist nicht möglich.

Aus der JP 3 225127 B2, der JP S60 76680 A und der JP H01-116 481 A sind Vorrichtungen bekannt mit deren Hilfe es möglich ist, die von der Oberfläche einer Trommel emittierten beta-Strahlen in einem Interferometer zu detektieren. Diese Vorrichtungen umfassen einen Drehtisch, der auf einer Hubvorrichtung angeordnet ist, sowie seitlich und oberhalb des Drehtisches einen Detektor für ionisierende Strahlung. Die zu messende Trommel wird auf den Drehtisch gesetzt. Indem der Drehtisch gedreht und angehoben wird, gelangt die gesamte Oberfläche der Trommel einmal in die Nähe des Detektors, so dass eventuell auf der Oberfläche der Trommel befindliche radioaktive Kontaminationen detektiert werden. Diese Vorrichtungen sind nicht zur Prüfung von Rohren oder anderen langgestreckten Gegenständen mit einem verhältnismäßig kleinen Durchmesser und in Folge dessen kleinem Krümmungsradius geeignet.

Aus der US 5, 371, 363 ist eine Vorrichtung zur Messung von ionisierender Strahlung im Inneren eines Rohrs bekannt. Diese Vorrichtung ist sehr aufwändig und komplex, weil sie mehrere Gruppen von Detektoren umfasst. Die Gruppen von Detektoren sind hintereinander angeordnet. Die Detektoren einer Gruppe wiederum sind so in einer Ebene angeordnet, dass sie einen ringförmigen Streifen der Innenfläche des Rohrs auf einmal erfassen.

Aus der US 5, 444, 746 ist eine Vorrichtung zur Messung von ionisierender Strahlung eines Rohrs bekannt, die eine Transporteinrichtung und einen an einem Roboterarm mit fünf Bewegungsachsen befestigten Detektor für ionisierende Strahlung aufweist. Aufgrund der vielen Freiheitsgrade des Roboterarmes kann die Oberseite von Gegenständen mit sehr komplexen Geometrien auf ionisierende Strahlung untersucht werden. Die Unterseite der Gegenstände kann nur eingeschränkt untersucht werden.

Aus der US 6, 624, 425 B2 und der DE 36 85 891 T1 sind Vorrichtungen bekannt mit deren Hilfe es möglich ist, in einem Behälter vorhandene strahlende Stoffe zu detektieren. Dazu werden eine Strahlungsquelle und ein Detektor eingesetzt, die außerhalb des Abfallbehälters angeordnet sind.

Aufgabe der vorliegenden Erfindung ist, eine Prüfvorrichtung und ein Verfahren zu schaffen, die es ermöglichen, automatisiert auf Rohren, Stangen und Kabeln mit unterschiedlichen Durchmessern eine Oberflächenkontamination mit einer Genauigkeit zu ermitteln, die den gesetzlichen Vorgaben genügt.

Die Aufgabe wird erfindungsgemäß durch eine Vorrichtung mit den Merkmalen des Patentanspruchs 1 gelöst. Weiterhin werden ein Verfahren zum Detektieren einer Oberflächenkontamination nach Anspruch 11 und eine Steuervorrichtung für eine erfindungsgemäße Prüfvorrichtung nach Anspruch 13 offenbart.

Die Detektoren dienen zum Erfassen einer ionisierenden (radioaktiven) Strahlung, wobei Signale der Detektoren durch eine spezielle Messelektronik ausgewertet werden. Vorzugweise sind drei, vier oder sogar fünf bis zehn Detektoren vorgesehen, die am Umfang des langgestreckten Gegenstandes angeordnet sind. Es werden bevorzugt klein bauende, insbesondere schmal ausgebildete Detektoren verwendet. Die Anzahl der Detektoren, der Abstand zwischen den Detektoren und der Abstand zwischen den Detektoren und dem langgestreckten Gegenstand sind dabei abhängig z.B. von dem Querschnittsprofil, bzw. dem Durchmesser des zu prüfenden langgestreckten Gegenstands.

Die DIN ISO 11929 gibt Vorgaben zur Bestimmung von charakteristischen Grenzen (Erkennungsgrenze, Nachweisgrenze und Grenzen des Vertrauensbereichs) bei Messungen von ionisierender (radioaktiver) Strahlung. Für ein erfindungsgemäßes Prüfverfahren ist insbesondere die Nachweisgrenze bedeutend, über die - abhängig vom Durchmesser des langgestreckten Gegenstandes - der maximale Abstand der Detektoren zum langgestreckten Gegenstand automatisch berechnet und entsprechend eingestellt werden kann. Dabei können die Detektoren derart verstellt werden, dass der vorgegebene Abstand zu dem langgestreckten Gegenstand erreicht beziehungsweise unterschritten wird. Es ist aber auch möglich, dass der langgestreckte Gegenstand gegen fest angeordnete Detektoren positioniert wird. Ferner ist es möglich, dass die Anordnung der Detektoren an den Umfang des langgestreckten Gegenstandes angepasst wird und der langgestreckte Gegenstand anschließend in dem berechneten Abstand positioniert wird. All diese Funktionen können vorzugsweise durch entsprechend ausgebildete Vorrichtungen automatisch durchgeführt werden.

Zum Einjustieren des Abstandes der Detektoren zum langgestreckten Gegenstand kann bspw. eine Drehvorrichtung den langgestreckten Gegenstand auf einem Trägertisch definiert um die Längsachse drehen.

Ferner ist vorgesehen, dass in der Prüfvorrichtung mehrere Detektoren in Umfangsrichtung in einem gleichen Abstand zum langgestreckten Gegenstand angeordnet sind. Zusätzlich können in der Prüfvorrichtung mehrere Detektoren in Längsrichtung des langgestreckten Gegenstands hintereinander angeordnet sein. Der Abstand entspricht dabei maximal dem Abstand, der durch die Nachweisgrenze ermittelt wird. Dabei wird - entsprechend des vorgesehenen Abstandes der einzelnen Detektoren zueinander - ein definierter Prüfabschnitt auf dem Umfang des langgestreckten Gegenstandes definiert. Durch automatisches Drehen um die Längsachse kann der gesamte Umfang des langgestreckten Gegenstandes detektiert werden.

Ist der komplette Umfang des langgestreckten Gegenstands überprüft worden, kann der langgestreckte Gegenstand in Längsrichtung um eine vorgegebene Länge weiter durch die Prüfvorrichtung vorgetrieben werden und eine neue, anschließende Umfangsbahn kann detektiert werden.

Alternativ kann in der erfindungsgemäßen Prüfvorrichtung, insbesondere bei kleinen Durchmessern des langgestreckten Gegenstandes, mindestens ein Detektor in einem zu mindestens einem anderen Detektor abweichenden Abstand zum langgestreckten Gegenstand angeordnet sein. Damit kann eine versetzte Anordnung von Detektoren geschaffen werden, die an einer kleineren Umfangsfläche des langgestreckten Gegenstandes angeordnet ist.
Die Prüfvorrichtung ist geeignet für langgestreckte Gegenstände mit einem nahezu beliebigen Durchmesser. Bevorzugt geeignet ist jedoch ein Durchmesser von >6 cm. Die langgestreckten Gegenstände können dabei Rohre, Stangen, Stäbe oder Kabel, insbesondere Starkstromkabel sein. Bevorzugt werden gerade ausgebildete Gegenstände mit der Prüfvorrichtung detektiert.

Bei der Detektion von Rohren kann in einer alternativen Ausführungsform die Prüfvorrichtung auch einen Innenrohrdetektor aufweisen, der gleichzeitig oder zeitlich versetzt eine Oberflächenkontamination im Inneren eines Rohrs ermittelt.

In einer bevorzugten Ausführungsform ist vorgesehen, dass die Prüfvorrichtung mindestens einen Detektor umfasst, der eine Beta-Strahlung ermittelt.

Alternativ oder zusätzlich könnten auch Gamma-Detektoren verwendet werden, die das Spektrum der Gammastrahlung einer Quelle ionisierender Strahlung erfassen.

Außerdem ist vorgesehen, dass die Prüfvorrichtung eine Speichereinrichtung zum Speichern von Detektionsergebnissen und eine Datenverarbeitungseinrichtung umfasst oder mit ihr verbunden ist. Die Datenverarbeitungseinrichtung kann z.B. als Mikroprozessor ausgebildet sein und kann ein Computerprogramm umfassen, das auch zur Anwendung des erfindungsgemäßen Verfahrens programmiert ist. Die Datenverarbeitungseinrichtung kann außerdem z.B. eine Datenbank in der Speichereinrichtung verwalten, in der die Ergebnisse abgelegt werden. Die Datenbank bzw. die Speichereinrichtung kann zur Weiterverarbeitung der Detektionsergebnisse über entsprechende Einrichtungen in ein Kommunikationsnetzwerk eingebunden werden.

Das Speicherelement und/oder die Datenverarbeitungseinrichtung kann auch bspw. auf einem externen Personal-Computer angeordnet sein.

Ferner kann vorgesehen sein, dass die Prüfvorrichtung eine Ausgabeeinrichtung zum Ausgeben der Detektionsergebnisse bzw. zum Ausdrucken von Freigabedokumenten umfasst. Dabei kann die Prüfvorrichtung als "Freigabemessplatz" entsprechend §29 StrlSchV dienen. Nach §29 StrlSchV dürfen radioaktive Stoffe, die kontaminiert sind, als nicht radioaktive Stoffe nur dann verwendet oder beseitigt werden, wenn die zuständige Stelle mit den entsprechenden Freigabedokumenten eine Freigabe erteilt. Dies kann nur dann geschehen, wenn die in der Strahlenschutzverordnung festgeschriebenen Freigabewerte unterschritten werden, was durch das erfindungsgemäße Verfahren ermittelt wird und in den Freigabedokumenten dokumentiert ist.

Außerdem kann vorgesehen sein, dass die Prüfvorrichtung Teil eines Kommunikationsnetzwerks ist. In diesem Fall könnten die Speichereinrichtung, die Datenverarbeitungseinrichtung und/oder die Ausgabeeinrichtung auch extern im Kommunikationsnetzwerk eingebunden sein.

Im erfindungsgemäßen Verfahren nach Anspruch 11 wird die erfindungsgemäße Prüfvorrichtung verwendet. Das Verfahren umfasst dabei folgende Verfahrensschritte:
a) Einbringen des langgestreckten Gegenstands in die Prüfvorrichtung. Dabei sollte der langgestreckte Gegenstand vorzugsweise eine Länge von ca. 110 cm oder weniger aufweisen, damit er in einer genormten Gitterbox einer Freimessanlage gelagert werden kann.
b) Anordnen von Detektoren der Prüfvorrichtung in einem vorgegebenen Abstand zu dem langgestreckten Gegenstand. Dabei können die Detektoren und/oder der langgestreckte Gegenstand durch entsprechend ausgebildete Vorrichtungen bewegt werden.
c) Erfassen und Auswerten von Detektorsignalen. Dabei sollte das Erfassen der Detektorsignale über alle Detektoren simultan oder sequentiell auf der Oberfläche des langgestreckten Gegenstands erfolgen.
d) Abspeichern eines Detektionsergebnisses in der dazu vorgesehenen Speichereinrichtung bzw. Datenbank.
e) Drehen des langestreckten Gegenstands in der Prüfvorrichtung in Umfangsrichtung. Dies kann kontinuierlich, aber auch schrittweise erfolgen, wobei die Schrittweite z.B. in Abhängigkeit der Breite des durch die Anordnung der Detektoren erfassten Prüfbereichs gewählt wird. Über eine entsprechend ausgebildete radiale Vorschubkontrolle (z.B. durch einen (Drehwinkel-)Sensor) kann ermittelt werden, ob der gesamte Umfang des Gegenstands auf Kontaminationen hin überprüft und vermessen wurde.
f) Vorschub des langestreckten Gegenstands in Längsrichtung um einen vorgegebenen Weg. Nachdem gemäß der Verfahrensschritte c) bis e) der gesamte Umfang des langgestreckten Gegenstands auf einer Bahn detektiert wurde, wird vorzugsweise der langgestreckte Gegenstand um einen vorgegebenen Weg in axialer Richtung bewegt, wobei der Vorschub in axialer Richtung in Abhängigkeit des durch die Detektoren erfassten Prüfbereichs gewählt wird.
   Die Verfahrensschritte e) und f) können simultan oder sequentiell erfolgen.
   Anschließend folgen wieder die Verfahrensschritte c) bis e) bzw. f) bis der komplette Gegenstand erfasst wurde. Das Erreichen eines freien Endes des langgestreckten Gegenstandes und damit das Ende der Überprüfung kann z.B. durch eine entsprechend ausgebildete axiale Vorschubkontrolle (z.B. durch einen Sensor) ermittelt werden.
g) Ausgeben eines Detektionsergebnisses bzw. Ausdrucken von Freigabedokumenten für den langgestreckten Gegenstand an der Ausgabeeinrichtung.

Durch das erfindungsgemäße Verfahren wird der Zeit- und Personalaufwand bei der Kontaminationsmessung erheblich reduziert. Oftmals sind viele Kilometer von Rohrleitungen, Stangen, Stäben und Starkstromelektrokabeln zu detektieren. Außerdem wird durch das erfindungsgemäße Verfahren auch die Zuverlässigkeit der Detektionsergebnisse stark verbessert. Die für das Freigabeverfahren notwendigen Dokumente bzw. Protokolle werden automatisch erstellt.

Nachfolgend werden anhand der Figuren Ausführungsbeispiele der Erfindung beispielhaft erläutert. Es zeigen:
- Figur 1: eine bekannte Vorrichtung zum Detektieren einer Oberflächenkontamination an langgestreckten Gegenständen mit einem runden Querschnitt;
- Figur 2: eine erfindungsgemäße Vorrichtung zum Detektieren einer Oberflächenkontamination an langgestreckten Gegenständen mit einem runden Querschnitt in einer ersten Ausführungsform;
- Figur 3: eine erfindungsgemäße Vorrichtung zum Detektieren einer Oberflächenkontamination an langgestreckten Gegenständen mit einem runden Querschnitt in einer zweiten Ausführungsform;
- Figur 4: eine vereinfachte Darstellung einer erfindungsgemäßen Prüfvorrichtung mit einem Innenrohrdetektor;
- Figur 5: eine Blockdarstellung mit allen Funktionseinheiten der erfindungsgemäßen Prüfvorrichtung; und
- Figur 6: ein Flussdiagramm zu einem bevorzugten Ablauf eines erfindungsgemäßen Verfahrens.

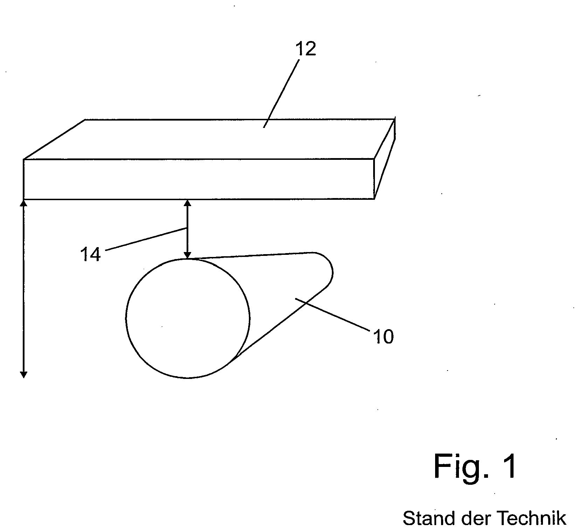

Figur 1 zeigt in einer schematischen Darstellung einen langgestreckten Gegenstand 10, der als Rohr ausgebildet ist. Wenn der Gegenstand 10 mit einer bekannten Vorrichtung und einem bekannten Verfahren auf eine Oberflächenkontamination, insbesondere radioaktive Oberflächenkontamination, detektiert werden soll (Stand der Technik), wird ein Detektor 12 in einem vorgegebenen Abstand 14 über die gesamte Oberfläche des Gegenstand 10 geführt.

Der Abstand 14 entspricht im Wesentlichen einer Nachweisgrenze für Messungen von ionisierender (radioaktiver) Strahlung, die nach DIN ISO 11929 ermittelt werden kann. Die Nachweisgrenze ist abhängig vom Durchmesser des langgestreckten Gegenstandes 10. Der Detektor 12 ist in der Regel handgeführt, so dass große Messungenauigkeiten nicht zu vermeiden sind. Ein Protokoll der detektierten Messwerte kann nicht automatisch ausgegeben werden.

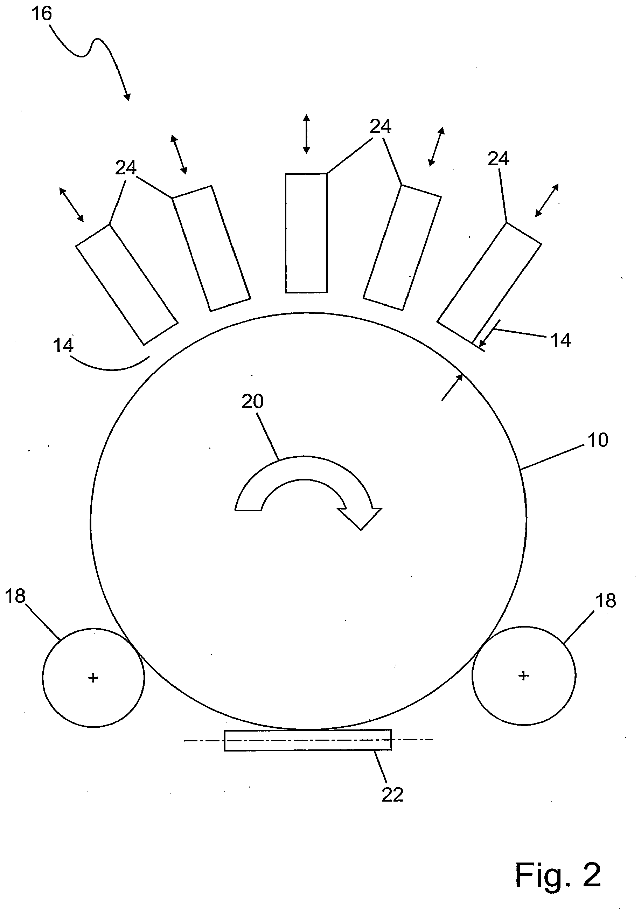

Figur 2 zeigt eine erfindungsgemäße Prüfvorrichtung 16 in einer schematischen Darstellung und in einer ersten Ausführungsform. In der Prüfvorrichtung 16 kann ein langgestreckter Gegenstand 10, z.B. ein Rohr, eine Stange, ein Stab oder ein Kabel, insbesondere ein Starkstromkabel, in Längsrichtung und in Umfangsrichtung bewegbar gelagert werden. Der langgestreckte Gegenstand 10 kann über drehantreibbare Rollen 18 in Umfangsrichtung gedreht werden (siehe Pfeil 20). Außerdem ist vorgesehen, dass der langgestreckte Gegenstand 10 in Längsrichtung durch einen Längsvorschub 22, z.B. durch Rollen, einen bewegbaren Schlitten oder ein Förderband, bewegt werden kann. Die Drehung durch die Rollen 18 und der Vorschub in Längsrichtung durch den Längsvorschub 22 kann kontinuierlich oder schrittweise und sequentiell erfolgen. Vorzugsweise ist zumindest die Fortbewegung durch den Längsvorschub 22 schrittweise.

Die Prüfvorrichtung 16 ist vorgesehen zum Detektieren der Oberflächenkontamination an langgestreckten Gegenständen 10 mit einem nahezu beliebigen Durchmesser. Bevorzugt geeignet ist ein Durchmesser von > 6 cm, wobei die langgestreckten Gegenstände 10 in der Regel gerade ausgebildet sind.

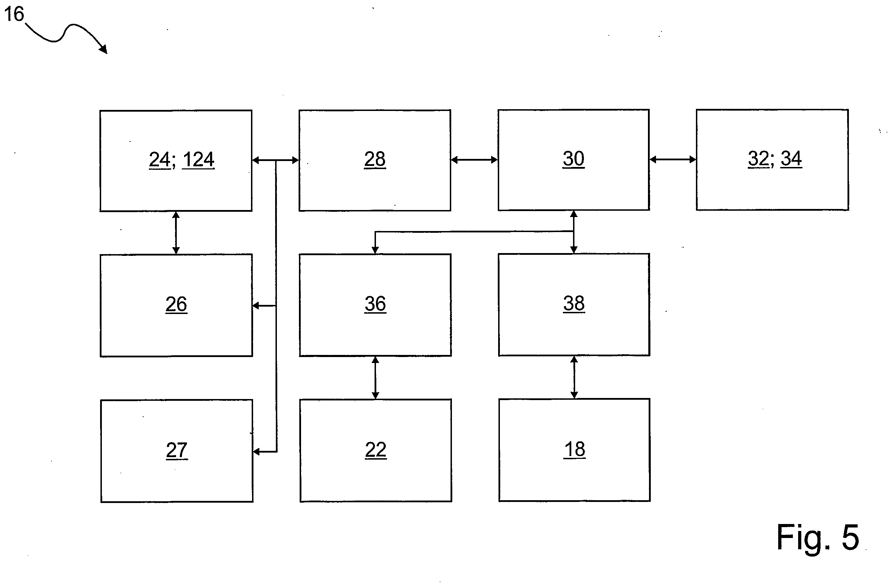

In der dargestellten ersten Ausführungsform sind an einer entgegengesetzten Seite zum Vortrieb 22 Detektoren 24 in dem durch die Messvorschriften vorgegebenen Abstand 14 um den langgestreckten Gegenstand 10 angeordnet. Die Detektoren dienen zum Erfassen einer ionisierenden Strahlung, wobei Signale der Detektoren 24 durch eine Auswerteelektronik 28 (siehe Figur 5) ausgewertet werden. Vorzugweise sind fünf bis zehn Detektoren 24 vorgesehen. Der Abstand 14 wird bekanntermaßen nach den Vorgaben der DIN ISO 11929 ermittelt und entspricht maximal der Nachweisgrenze, die abhängig vom Durchmesser des langgestreckten Gegenstandes 10 ist (siehe auch Erläuterung zu Figur 1). Die Berechnung der Nachweisgrenze kann z.B. in der Auswerteelektronik 28 durchgeführt werden.

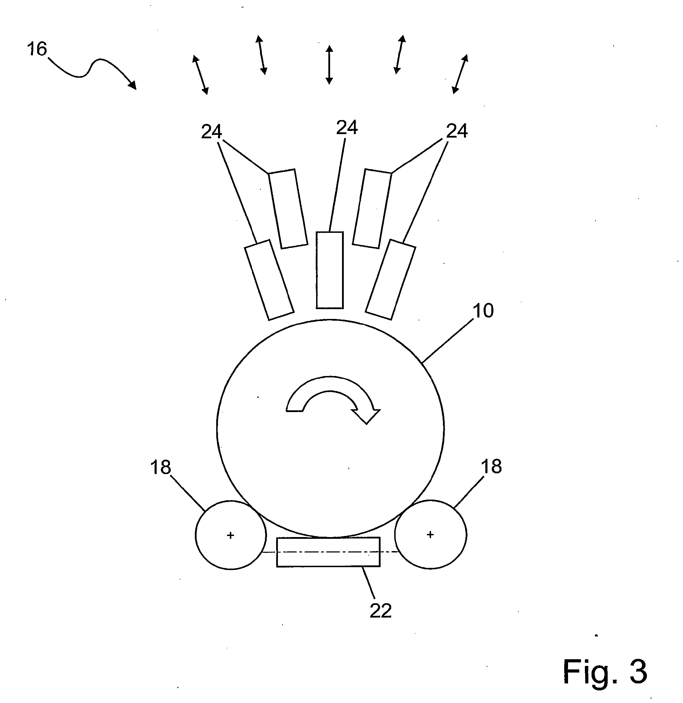

Damit der vorgeschriebene Abstand 14 zwischen den Detektoren 24 und dem zu prüfenden Gegenstand 10 rasch und zuverlässig eingestellt werden kann, können die Detektoren 24 in radialer Richtung bewegt werden. Dies ist durch die Doppelpfeile (ohne Bezugszeichen) in den Figuren 2 und 3 angedeutet. Die Einstellung des Abstands 14 zwischen den Detektoren 24 und dem Gegenstand 10 kann manuell oder automatisch erfolgen. Letztere Alternative wird bevorzugt, weil sie Arbeitszeit einspart und außerdem die korrekte Einstellung des Abstands 14 automatisiert erfasst und dokumentiert werden kann.

Ein Abstand und eine Anordnung der einzelnen Detektoren 24 zueinander sind in dieser Ausführungsform gleichmäßig ausgebildet. Vorzugsweise sind die Detektoren 24 besonders kompakt und schmal ausgebildet. In dem dargestellten Ausführungsbeispiel sind fünf Detektoren 24 vorgesehen, die einen Umfangswinkel von etwa 120° abdecken. Die Zahl der Detektoren 24 und deren Anordnung um den Gegenstand 10 herum kann auch anders gewählt werden. So können zum Beispiel auch drei Detektoren 24 in einem Abstand von 120° angeordnet werden.

In einem erfindungsgemäßen Verfahren können die Detektoren 24 durch eine radial zu dem langgestreckten Gegenstand 10 wirkende Steuerung 26 (siehe Fig. 5) gezielt räumlich verstellt werden, so dass der Abstand 14 einstellbar ist. Es ist auch möglich, dass der Gegenstand 10 relativ zu fest angeordneten Detektoren 24 positioniert wird.

Ferner ist es möglich, dass die Anordnung der Detektoren 24 an den Durchmesser des Gegenstandes 10 angepasst wird und der Gegenstand 10 anschließend in dem berechneten Abstand 14 positioniert wird. Dies kann bspw. durch ein vertikales Verschieben des Längsvorschubs 22 geschehen. Diese Funktionen werden vorzugsweise automatisch durchgeführt.

Besonders bevorzugt ist die Verwendung von Beta-Detektoren. Gamma-Detektoren könnten auch verwendet werden.

Das erfindungsgemäße Verfahren ist in einer Steuereinrichtung 30 ablauffähig. Die Steuereinrichtung 30 (siehe Figur 5) ist z.B. als ein Messrechner mit einer DatenverarbeitungsEinrichtung ausgebildet, die zusätzlich eine Speichereinrichtung 32 (siehe Fig. 5) zum Speichern von Detektionsergebnissen umfassen kann. Die

Datenverarbeitungseinrichtung ist z.B. als Mikroprozessor ausgebildet. Die Steuereinrichtung 30 kann außerdem z.B. eine Datenbank in der Speichereinrichtung 32 verwalten, in der die Detektionsergebnisse abgelegt werden.

Die Speichereinrichtung und/oder die DatenverarbeitungsEinrichtung könnte aber auch bspw. auf einem mit der Prüfvorrichtung 16 vernetzten, externen Personal-Computer angeordnet sein.

Die Prüfvorrichtung kann außerdem eine Ausgabeeinrichtung 34 (siehe Fig. 5) zum Ausgeben der Detektionsergebnisse bzw. zum Ausdrucken von Freigabedokumenten umfassen. Dabei könnte die Prüfvorrichtung 16 als "Freigabemessplatz" entsprechend §29 StrlSchV dienen. Nach §29 StrlSchV dürfen radioaktive Stoffe, die kontaminiert sind, als nicht radioaktive Stoffe nur dann verwendet oder beseitigt werden, wenn die zuständige Stelle zuvor eine Freigabe erteilt. Dies kann nur dann geschehen, wenn die in der Strahlenschutzverordnung festgeschriebenen Freigabewerte unterschritten werden, was durch das erfindungsgemäße Verfahren ermittelt wird. Eine Freigabe von radioaktiven Stoffen und kerntechnischen Anlageteilen regelt die DIN ISO 25457-1.

Die Prüfvorrichtung kann Teil eines Kommunikationsnetzwerks sein. Damit ist es möglich, auch extern, also außerhalb der Prüfvorrichtung 16 die Detektionsergebnisse zu speichern und Freigabedokumente auszudrucken.

Figur 3 zeigt die erfindungsgemäße Prüfvorrichtung 16 in einer schematischen Darstellung und in einer zweiten Ausführungsform. In der zweiten Ausführungsform der Prüfvorrichtung 16 sind die einzelnen Detektoren 24 versetzt zu einander angeordnet. Alle Abstände 14 der Detektoren 24 zum langgestreckten Gegenstand 10 liegen jedoch innerhalb der zuvor berechneten Nachweisgrenze. Die versetzte Anordnung der Detektoren 24 ist dann besonders vorteilhaft anzuwenden, wenn es sich um einen besonders kleinen Durchmesser des langgestreckten Gegenstandes 10 handelt. Es ist natürlich auch möglich die Detektoren 24 in axialer Richtung des Gegenstands 10 versetzt anzuordnen.

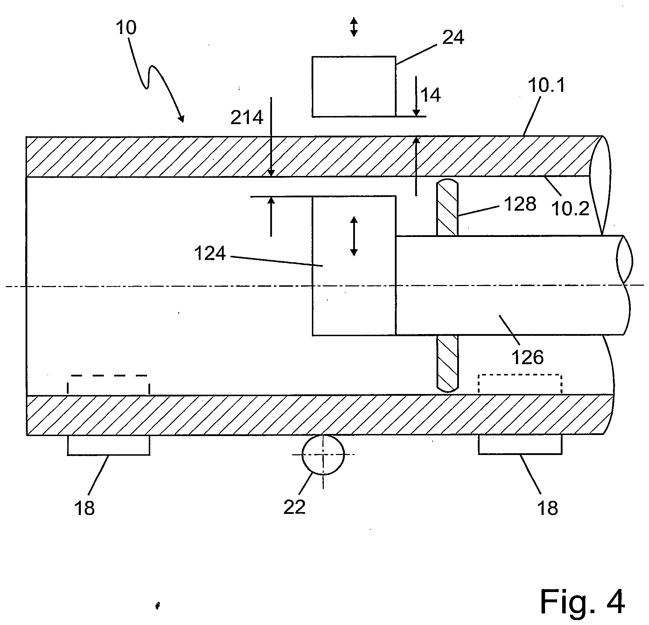

Die Figur 4 zeigt ein Ausführungsbeispiel einer erfindungsgemäßen Prüfvorrichtung 16 mit der die Außenfläche 10.1 und die Innenfläche 10.2 eines rohrförmigen langgestreckten Gegenstands 10 gleichzeitig oder sequentiell auf ionisierende Strahlung geprüft werden können.

Zu diesem Zweck sind einer oder mehrere Innenrohrdetektoren 124 an einer Stange 126 befestigt. Der Innenrohrdetektor 124 und die außerhalb des Rohrs 10 angeordneten Detektoren 24 sind bei diesem Ausführungsbeispiel in einer Ebene angeordnet.

Außerdem sind der Innenrohrdetektor 124 und die außerhalb des Rohrs 10 angeordneten Detektoren einander gegenüberliegend angeordnet. Dies erleichtert die Einstellung des Abstands 14 zwischen den außerhalb des Rohrs 10 angeordneten Detektoren 24 und der Außenfläche 10.1 des Rohrs 10 sowie des Abstands 214 zwischen dem Innenrohrdetektor 124 und der Innenfläche 10.2 des Rohrs 10. Um den Abstand 214 einstellen zu können, ist der Innenrohrdetektor 124 wie die Detektoren 24 auch in radialer Richtung verfahrbar.

Auf des Stange 126 sind Zentriermittel 128 in Form einer Scheibe aufgesteckt, die gewährleisten, dass der Abstand 214 eingehalten wird und dass der Innenrohrdetektor 124 das Rohr 10 berührt.

Ansonsten arbeitet dieses Ausführungsbeispiel wie die zuvor beschriebenen Ausführungsbeispiele.

Figur 5 zeigt eine Blockdarstellung mit allen Funktionseinheiten der Prüfvorrichtung 16 mit deren Einfluss aufeinander. Ausgangspunkt ist die Steuereinrichtung 30, die einerseits die Auswerteelektronik 28 für die Auswertung der Signale der Detektoren 24, 124 steuert. Außerdem steuert die Steuereinrichtung 30 die axiale Vorschubkontrolle 36 mit dem Vorschub 22, sowie die radiale Vorschubkontrolle 38 mit den angetriebenen Rollen 18. Die Auswerteelekttronik 28 steuert zudem die radial zu dem langgestreckten Gegenstand 10 wirkende Positionierung bzw. Steuerung 26 der Detektoren 24 mit der der Abstand 14 zwischen Detektoren 24 und dem Gegenstand 10 eingestellt wird. In entsprechender Weise wird der Abstand 124 zwischen Innenrohrdetektor 124 und dem Gegenstand 10 in einem optionalen Funktionsblock 27 gesteuert, wie dies in der Beschreibung zu Figur 2, 3 und 4 erläutert wurde.

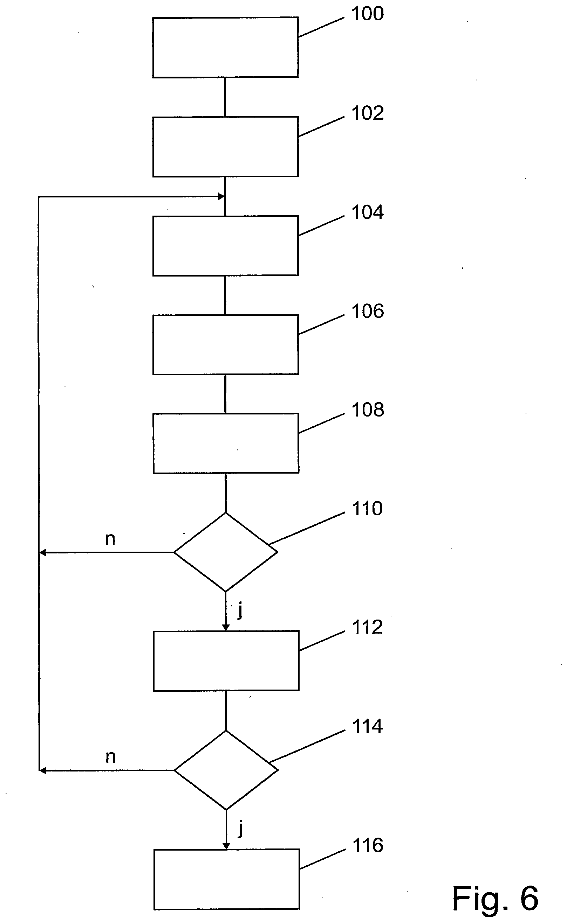

Das erfindungsgemäße Verfahren verwendet die erfindungsgemäße Prüfvorrichtung 16 und umfasst in einer bevorzugten Ausführungsform die in Figur 6 dargestellten Verfahrensschritte:
Schritt 100: Einbringen des langgestreckten Gegenstands 10 in die Prüfvorrichtung 16. Dabei sollte der langgestreckte Gegenstand 10 vorzugsweise eine Länge von ca. 110 cm oder weniger aufweisen, damit er in einer genormten Gitterbox einer Freimessanlage gelagert werden kann.
Schritt 102: Anordnen von Detektoren 24 in einem vorgegebenen Abstand 14 zu dem langgestreckten Gegenstand 10. Dabei können die Detektoren 24 und/oder der langgestreckte Gegenstand 10 durch entsprechend ausgebildete Einstell-Vorrichtungen in radialer Richtung zur Einstellung des Abstands 14 bewegt werden. Der oder die Innenrohr-Detektoren 124 können durch entsprechend ausgebildete Einstell-Vorrichtungen in radialer Richtung zur Einstellung des Abstands 214 bewegt werden.
Schritt 104: Erfassen und Auswerten von Detektorsignalen. Das Erfassen und Auswerten der einzelnen Detektorsignale findet in der Regel simultan mit allen Detektoren 24, 124 statt.
Schritt 106: Abspeichern des oder der Detektionsergebnisse in der dazu vorgesehenen Speichereinrichtung 32.
Schritt 108: Drehen des langestreckten Gegenstands 10 in der Prüfvorrichtung 16 in Umfangsrichtung. Dies kann kontinuierlich, aber auch schrittweise erfolgen, wobei ein Drehwinkel-Schritt z.B. die Breite des durch die Anordnung der Detektoren 24 gebildeten Messbereichs umfasst. Über die entsprechend ausgebildete radiale Vorschubkontrolle 38 (siehe Fig. 5) kann ermittelt werden, ob der gesamte Umfang des langgestreckten Gegenstands 10 detektiert wurde.

Ist der gesamte Umfang des Gegenstands auf Kontaminationen hin überprüft worden (detektiert; Abfrage 110), folgt der Schritt 112: Einstellen des Vortriebs 22 zur Bewegung des langgestreckten Gegenstands 10 in Längserstreckung um eine vorgegebene Länge. Die Längsbewegung ist auf die Länge des durch die Anordnung der Detektoren 24 gebildeten Messbereichs abgestimmt, so dass sukzessive die gesamte Oberfläche des Gegenstands 10 außen und innen erfasst wird.

Ist der gesamte Umfang noch nicht detektiert (Abfrage 110), so werden die Schritte 104 bis 110 wiederholt.

Ist das freie Ende des langgestreckten Gegenstandes 10 erreicht und damit das Ende der Detektion (Abfrage 114) folgt Schritt 116. Das Erreichen des freien Endes des langgestreckten Gegenstands 10 kann z.B. durch eine entsprechend ausgebildete axiale Vorschubkontrolle 36 (siehe Fig. 5) ermittelt werden. Im Schritt 116 erfolgt die Ausgabe des Detektionsergebnisses bzw. das Ausdrucken von Freigabedokumenten für den langgestreckten Gegenstand 10 an der Ausgabeeinrichtung 34 (siehe Fig. 5). Ist das freie Ende des langgestreckten Gegenstandes 10 nicht erreicht, so werden die Schritte 104 bis 114 wiederholt.

## Patentansprüche

1. Prüfvorrichtung (16) zum Detektieren einer Oberflächenkontamination an langgestreckten Gegenständen (10) mit einem runden oder polygonalen Querschnitt, wobei der langgestreckte Gegenstand (10) auf drehantreibbaren Rollen (18) bewegbar gelagert ist, so dass der langgestreckte Gegenstand (10) relativ zu der Prüfvorrichtung (16) in Umfangsrichtung drehbar ist, wobei die Prüfvorrichtung (16) mindestens zwei Detektoren (24) zum Erfassen der Oberflächenkontamination umfasst und die mindestens zwei Detektoren (24) um den langgestreckten Gegenstand (10) herum angeordnet sind,
**dadurch gekennzeichnet, dass** die Prüfvorrichtung (16) einen Längsvorschub (22) mittels dem der langgestreckte Gegenstand (10) in Richtung seiner Längserstreckung durch die Prüfvorrichtung bewegbar ist umfasst, und dass die mindestens zwei Detektoren (24) in radialer Richtung bewegbar sind, um einen vorgegebenen Abstand (14) zwischen dem langgestreckten Gegenstand (10) und den Detektoren einzustellen.

2. Prüfvorrichtung (16) nach Anspruch 1, **dadurch gekennzeichnet, dass** mindestens einer der Detektoren (24) ein Beta-Detektor ist.

3. Prüfvorrichtung (16) nach Anspruch 1 oder 2, **dadurch gekennzeichnet, dass** mindestens ein Detektor (24) in einem Abstand zum langgestreckten Gegenstand (10) angeordnet ist, der von dem Abstand mindestens eines anderen Detektors (24) zum langgestreckten Gegenstand (10) abweicht.

4. Prüfvorrichtung (16) nach einem der vorhergehenden Ansprüche, **dadurch gekennzeichnet, dass** die Prüfvorrichtung (16) einen Innenrohrdetektor (124) aufweist, und dass der Innenrohrdetektor (124) gleichzeitig oder zeitlich versetzt zu den anderen Detektoren (24) eine Oberflächenkontamination im Inneren eines Rohrs (10) ermittelt.

5. Prüfvorrichtung (16) nach Anspruch 4, **dadurch gekennzeichnet, dass** der Innenrohrdetektor (124) an einer Stange (126) oder einem Rohr angeordnet ist.

6. Prüfvorrichtung (16) nach Anspruch 4 oder 5, **dadurch gekennzeichnet, dass** Zentriermittel (128) vorgesehen sind, und dass die Zentriermittel (128) den Innenrohrdetektor (124) relativ zu einem Innendurchmesser eines zu untersuchenden Rohrs (10) zentrieren.

7. Prüfvorrichtung (16) nach einem der vorhergehenden Ansprüche, **dadurch gekennzeichnet, dass** der langgestreckte Gegenstand (10) ein Rohr, eine Stange, ein Stab oder ein Kabel mit jeweils beliebigem Durchmesser ist.

8. Prüfvorrichtung (16) nach einem der vorhergehenden Ansprüche, **dadurch gekennzeichnet, dass** die Prüfvorrichtung (16) eine Speichereinrichtung (32) zum Speichern von Ergebnissen und/oder eine Datenverarbeitungseinrichtung umfasst.

9. Prüfvorrichtung (16) nach einem der vorhergehenden Ansprüche, **dadurch gekennzeichnet, dass** die Prüfvorrichtung (16) eine Ausgabeeinrichtung (34) zum Ausgeben der Detektionsergebnisse bzw. zum Ausdrucken von Freigabedokumenten umfasst.

10. Prüfvorrichtung (16) nach einem der vorhergehenden Ansprüche, **dadurch gekennzeichnet, dass** die Prüfvorrichtung (16) Teil eines Kommunikationsnetzwerks ist.

11. Verfahren zum Detektieren einer Oberflächenkontamination an langgestreckten Gegenständen (10) mit einem runden oder polygonalen Querschnitt, **dadurch gekennzeichnet, dass** im Verfahren eine Prüfvorrichtung (16) gemäß der vorhergehenden Ansprüche verwendet wird und dass das Verfahren folgende Verfahrensschritte umfasst:
a) Einbringen des langgestreckten Gegenstands (10) in die Prüfvorrichtung (16);
b) Anordnen von Detektoren (24) der Prüfvorrichtung (16) in einem vorgegebenen Abstand (14) zu dem langgestreckten Gegenstand (10);
c) Erfassen und Auswerten von Detektorsignalen;
d) Abspeichern der Detektionsergebnisse in einer Speichereinrichtung (32);
e) Drehen des langestreckten Gegenstands (10) in der Prüfvorrichtung (16) in Umfangsrichtung;
c2) Erfassen und Auswerten von Detektorsignalen;
d2) Abspeichern der Detektionsergebnisse in einer Speichereinrichtung (32);
f) Vorschub in Längsrichtung des langestreckten Gegenstands (10) um einen vorgegebenen Weg;
f2) ein- oder mehrfaches Wiederholen der Verfahrensschritte c(, d), e) c2), d2) und/oder f)
g) Ausgeben der Detektionsergebnisse bzw. Ausdrucken von Freigabedokumenten für den langgestreckten Gegenstand (10) an einer Ausgabeeinrichtung (34).

12. Verfahren nach Anspruch 11, **dadurch gekennzeichnet, dass** das Drehen des langestreckten Gegenstands (10) und/oder der Vorschub (22) in Längsrichtung des langestreckten Gegenstands (10) schrittweise oder kontinuierlich durchgeführt wird.

13. Steuereinrichtung (30) für eine Prüfvorrichtung (16) zum Detektieren einer Oberflächenkontamination an langgestreckten Gegenständen (10) mit einem runden oder polygonalen Querschnitt, **dadurch gekennzeichnet, dass** sie ein Computerprogramm umfasst, das zur Anwendung eines Verfahrens nach einem der Ansprüche 11 oder 12 programmiert ist.

## Claims

1. Testing device (16) for detecting surface contamination on elongate objects (10) which have a round or polygonal cross section, the elongate object (10) being movably mounted on rotationally drivable rollers (18) such that the elongate object (10) is rotatable in the circumferential direction relative to the testing device (16), the testing device (16) comprising at least two detectors (24) for detecting the surface contamination and the at least two detectors (24) being arranged around the elongate object (10), **characterized in that** the testing device (16) comprises a longitudinal feed (22) by means of which the elongate object (10) can be moved through the testing device in the direction of the longitudinal extension of said object, and **in that** the at least two detectors (24) can be moved in a radial direction in order to set a predetermined distance (14) between the elongate object (10) and the detectors.

2. Testing device (16) according to claim 1, **characterized in that** at least one of the detectors (24) is a beta detector.

3. Testing device (16) according to claim 1 or claim 2, **characterized in that** at least one detector (24) is arranged at a distance from the elongate object (10) that differs from the distance of at least one other detector (24) from the elongate object (10).

4. Testing device (16) according to any of the preceding claims, **characterized in that** the testing device (16) has an inner tube detector (124), and **in that** the inner tube detector (124) detects surface contamination in the interior of a tube (10) at the same time as the other detectors (24) or in a temporally offset manner.

5. Testing device (16) according to claim 4, **characterized in that** the inner tube detector (124) is arranged on a rod (126) or a tube.

6. Testing device (16) according to claim 4 or claim 5, **characterized in that** centering means (128) are provided, and **in that** the centering means (128) center the inner tube detector (124) relative to an inner diameter of a tube (10) which is to be tested.

7. Testing device (16) according to any of the preceding claims, **characterized in that** the elongate object (10) is a tube, rod, bar or cable of any diameter.

8. Testing device (16) according to any of the preceding claims, **characterized in that** the testing device (16) comprises a memory apparatus (32) for storing results and/or a data processing apparatus.

9. Testing device (16) according to any of the preceding claims, **characterized in that** the testing device (16) comprises an output apparatus (34) for outputting the detection results or for printing clearance documents.

10. Testing device (16) according to any of the preceding claims, **characterized in that** the testing device (16) is part of a communication network.

11. Method for detecting surface contamination on elongate objects (10) which have a round or polygonal cross section, **characterized in that** a testing device (16) according to the preceding claims is used in the method, and **in that** the method comprises the following method steps:
a) inserting the elongate object (10) into the testing device (16);
b) arranging detectors (24) of the testing device (16) at a predetermined distance (14) from the elongate object (10) ;
c) detecting and evaluating detector signals;
d) storing the detection results in a memory apparatus (32) ;
e) rotating the elongate object (10) in the circumferential direction in the testing device (16);
c2) detecting and evaluating detector signals;
d2) storing the detection results in a memory apparatus (32) ;
f) moving the elongate object (10) in the longitudinal direction by a predetermined amount;
f2) repeating method steps c), d), e), c2), d2) and/or
f) one or more times
g) outputting the detection results or printing clearance documents for the elongate object (10) by means of an output apparatus (34).

12. Method according to claim 11, **characterized in that** the rotation of the elongate object (10) and/or the movement (22) of the elongate object (10) in the longitudinal direction is carried out stepwise or continuously.

13. Control apparatus (30) for a testing device (16) for detecting surface contamination on elongate objects (10) which have a round or polygonal cross section, **characterized in that** it comprises a computer program programmed to apply a method according to claim 11 or claim 12.

## Revendications

1. Dispositif de contrôle (16) destiné à détecter une contamination superficielle sur des objets allongés (10) présentant une section transversale ronde ou polygonale, dans lequel l'objet allongé (10) est monté mobile sur des rouleaux (18) pouvant être entraînés en rotation, de sorte que l'objet allongé (10) peut être amené en rotation dans la direction périphérique par rapport au dispositif de contrôle (16), dans lequel le dispositif de contrôle (16) comprend au moins deux détecteurs (24) destinés à détecter la contamination superficielle et les au moins deux détecteurs (24) sont agencés autour de l'objet allongé (10), **caractérisé en ce que** le dispositif de contrôle (16) comprend un dispositif d'avance longitudinale (22) au moyen duquel l'objet allongé (10) peut être déplacé à travers le dispositif de contrôle en direction de son étendue longitudinale, et **en ce que** les au moins deux détecteurs (24) peuvent être déplacés dans le sens radial, afin de régler une distance prédéfinie (14) entre l'objet allongé (10) et les détecteurs.

2. Dispositif de contrôle (16) selon la revendication 1, **caractérisé en ce qu'**au moins un des détecteurs (24) est un détecteur de rayonnement bêta.

3. Dispositif de contrôle (16) selon la revendication 1 ou 2, **caractérisé en ce qu'**au moins un détecteur (24) est situé à une certaine distance de l'objet allongé (10), qui est différente de la distance entre au moins un autre détecteur (24) et l'objet allongé (10).

4. Dispositif de contrôle (16) selon l'une quelconque des revendications précédentes, **caractérisé en ce que** le dispositif de contrôle (16) présente un détecteur d'intérieur de tube (124), et **en ce que** le détecteur d'intérieur de tube (124) détecte une contamination superficielle à l'intérieur d'un tube (10) en même temps que les autres détecteurs (24) ou de façon décalée dans le temps par rapport à ceux-ci.

5. Dispositif de contrôle (16) selon la revendication 4, **caractérisé en ce que** le détecteur d'intérieur de tube (124) est agencé sur une tige (126) ou un tube.

6. Dispositif de contrôle (16) selon la revendication 4 ou 5, **caractérisé en ce que** des moyens de centrage (128) sont prévus, et **en ce que** les moyens de centrage (128) centrent le détecteur d'intérieur de tube (124) par rapport à un diamètre intérieur d'un tube (10) à examiner.

7. Dispositif de contrôle (16) selon l'une quelconque des revendications précédentes, **caractérisé en ce que** l'objet allongé (10) est un tube, une tige, une barre ou un câble d'un diamètre dans chaque cas quelconque.

8. Dispositif de contrôle (16) selon l'une quelconque des revendications précédentes, **caractérisé en ce que** le dispositif de contrôle (16) comprend un dispositif mémoire (32) destiné à mettre en mémoire des résultats et/ou un dispositif de traitement de données.

9. Dispositif de contrôle (16) selon l'une quelconque des revendications précédentes, **caractérisé en ce que** le dispositif de contrôle (16) comprend un dispositif de sortie (34) destiné à sortir les résultats de la détection ou encore à imprimer des documents d'autorisation.

10. Dispositif de contrôle (16) selon l'une quelconque des revendications précédentes, **caractérisé en ce que** le dispositif de contrôle (16) fait partie d'un réseau de communication.

11. Procédé de détection d'une contamination superficielle sur des objets allongés (10) présentant une section transversale ronde ou polygonale, **caractérisé en ce qu'**un dispositif de contrôle (16) selon la revendication précédente est utilisé au cours du procédé et **en ce que** le procédé comprend les étapes de procédé suivantes:
a) l'introduction de l'objet allongé (10) dans le dispositif de contrôle (16);
b) l'agencement de détecteurs (24) du dispositif de contrôle (16) à une distance prédéfinie (14) de l'objet allongé (10);
c) l'acquisition et l'évaluation de signaux de détecteur;
d) la mise en mémoire des résultats de la détection dans un dispositif mémoire (32);
e) l'amenée en rotation de l'objet allongé (10) dans le dispositif de contrôle (16) dans la direction périphérique;
c2) l'acquisition et l'évaluation de signaux de détecteur;
d2) la mise en mémoire des résultats de la détection dans un dispositif mémoire (32);
f) l'avance dans la direction longitudinale de l'objet allongé (10) sur un parcours prédéfini;
f2) la répétition à une ou plusieurs reprises des étapes de procédé c), d), e), c2), d2) et/ou f)
g) la sortie des résultats de la détection ou encore l'impression de documents d'autorisation pour l'objet allongé (10) sur un dispositif de sortie (34).

12. Procédé selon la revendication 11, **caractérisé en ce que** l'amenée en rotation de l'objet allongé (10) et/ou l'avance (22) dans la direction longitudinale de l'objet allongé (10) sont réalisées de manière progressive ou continue.

13. Dispositif de commande (30) pour un dispositif de contrôle (16) destiné à détecter une contamination superficielle sur des objets allongés (10) présentant une section transversale ronde ou polygonale, **caractérisé en ce qu'**il comprend un programme informatique qui est programmé pour l'application d'un procédé selon l'une quelconque des revendications 11 ou 12.
